(19) Europäisches Patentamt
European Patent Office
Office européen des brevets

(11) **EP 3 486 154 B1**

(12) **EUROPÄISCHE PATENTSCHRIFT**

(45) Veröffentlichungstag und Bekanntmachung des Hinweises auf die Patenterteilung:
**26.08.2020 Patentblatt 2020/35**

(51) Int Cl.:
***B62M 6/45*** *(2010.01)* ***B62M 6/55*** *(2010.01)*

(21) Anmeldenummer: **18202271.5**

(22) Anmeldetag: **24.10.2018**

(54) **HYBRIDANTRIEB FÜR EIN ELEKTROFAHRRAD**

HYBRID DRIVE FOR AN ELECTRIC BICYCLE

ENTRAINEMENT HYBRIDE POUR UNE BICYCLETTE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.10.2017 DE 102017219398**

(43) Veröffentlichungstag der Anmeldung:
**22.05.2019 Patentblatt 2019/21**

(73) Patentinhaber: **Brose Antriebstechnik GmbH & Co.**
**Kommanditgesellschaft, Berlin**
**10553 Berlin (DE)**

(72) Erfinder: **HOPPACH, Elmar**
**97076 Würzburg (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
**EP-A1- 1 298 050 DE-A1- 10 250 645**
**JP-A- 2016 182 851 KR-A- 20140 022 333**
**US-A1- 2001 008 859 US-A1- 2012 012 412**
**US-A1- 2016 318 577 US-A1- 2017 183 056**
**US-A1- 2017 217 537 US-A1- 2017 259 883**
**US-A1- 2017 276 217 US-A1- 2017 291 660**

**EP 3 486 154 B1**

## Beschreibung

Die Erfindung betrifft ein Verfahren zum Betrieb eines Hybridantriebs für ein Elektrofahrrad gemäß dem Oberbegriff des Anspruchs 1 sowie einen Hybridantrieb für ein Elektrofahrrad gemäß Anspruch 7.

Ein Hybridantrieb für ein Elektrofahrrad mit einem Tretkurbelantrieb, einem elektrisch mit einem Akkumulator verbundenen elektromotorischen Antrieb, und einem abtriebsseitig mit einem Kettenrad eines Kettengetriebes des Elektrofahrrades verbundenen Getriebe, ermöglicht prinzipiell drei Betriebszustände:

- einen Fahrradbetrieb mit alleiniger Betätigung des Tretkurbelantriebs mittels Muskelkraft,,
- einen E-Bike-Betrieb mit alleinigem elektromotorischem Antrieb oder
- einen Pedelecbetrieb mit elektromotorisch unterstützter Muskelkraftbetätigung.

Aus der DE 10 2009 045 447 A1 ist ein Fahrrad mit elektrischem Hilfsantrieb bekannt, das einen Elektromotor, eine mit dem Elektromotor verbundene Batterie zur Speicherung elektrischer Energie, einen Kurbeltrieb mit Tretkurbeln, die an einer um eine Kurbelachse drehbar angeordnete Tretkurbelachse befestigt sind, und ein Planetengetriebe zum Antrieb des Fahrrads sowohl durch den Elektromotor als auch durch Muskelkraft eines Fahrers aufweist. Das Planetengetriebe und der über eine Hohlwelle mit einem Sonnenrad des Planetengetriebes verbundene Elektromotor sind um die innerhalb der Hohlwelle verlaufende Tretkurbelachse des Kurbeltriebs angeordnet, der entweder mit einem Planetenträger oder mit dem Hohlrad des Planetengetriebes verbunden ist. Zur Drehmomentoptimierung kann das Fahrrad eine als Ketten- oder Nabenschaltung ausgebildete Gangschaltung aufweisen.

Zum Abbremsen von Elektrofahrrädern werden mechanisch zu betätigende und mechanischen wirkende Backen-, Scheiben- oder Rücktrittbremsen eingesetzt, mit denen die kinetische Energie des Elektrofahrrades in Wärmeenergie umgewandelt und damit vernichtet wird. Um einen Teil dieser kinetischen Energie beim Abbremsen des Elektrofahrrades zurückzugewinnen und dabei die vom Ladezustand des Akkumulators abhängige Reichweite des elektromotorischen Antriebs zu erhöhen, ist es bekannt, durch Betätigung eines Handbremshebels einen Rekuperationsmodus zu starten, bei dem die kinetische Energie des Elektrofahrrades über den dann im Generatorbetrieb arbeitenden elektromotorischen Antrieb in elektrische Energie umgewandelt und im Akkumulator des elektromotorischen Antriebs gespeichert werden kann.

Um die elektrisch wirkende Bremse präzise anzusteuern, ist aus der DE 10 2010 028 645 A1 bekannt, die vom Benutzer des Elektrofahrrads ausgeführte Pedalbetätigung zum Einstellen eines gewünschten Rekuperationsmodus, einer elektrischen Bremse oder des Antriebsmodus zu verwenden. Als Pedalbetätigung wird eine Rückwärtsbewegung bzw. ein Pedaldrehmoment und/oder eine Pedaldrehzahl der Pedale des Tretkurbelantriebs verwendet wie sie bei Bremsbetätigungen einer konventionellen Rücktrittbremse eines Fahrrads auftritt. Durch eine Rückwärtsbewegung der Pedale des Tretkurbelantriebs kann somit ein elektrisches Bremsen und eine Rekuperation mit oder ohne mechanischem Bremsen, beispielsweise mittels einer Rücktrittbremse ausgeführt werden.

Neben Fahrrädern mit einer Gangschaltung zur Optimierung des vom Tretkurbelantrieb abgegebenen Drehmoments sind Eingang-Fahrräder mit Freilauf sowie Eingang-Fahrräder ohne Freilauf, sogenannte "Fixies" bekannt. Mit Letzteren kann aufgrund der starren Kopplung zwischen dem Tretkurbelantrieb und dem angetriebenen Rad auch rückwärts gefahren, das Fahrrad über die Pedale des Tretkurbelantriebs auf Position gehalten und durch Gegendruck auf die Pedale gebremst werden, sodass gegebenenfalls auch auf zusätzliche Bremsen - wie beim Bahn-, Kunstrad- und Radballsport vorgeschrieben - verzichtet werden kann. Es wird angestrebt, auch bei derartigen Eingang-Fahrrädern ohne Freilauf einen elektromotorischen Antrieb zur Unterstützung und zur Erweiterung der Funktion des Tretkurbelantriebs sowie zum elektrischen Bremsen und zur Rekuperation einzusetzen.

Aus der EP 1 642 820 B1 ist ein Antriebssystem mit elektrisch veränderlicher Übersetzung bekannt, das ein mit einer Antriebswelle verbundenes Antriebsritzel und eine abtriebsseitige Nabe aufweist, in der zwei Planetengetriebe mit jeweils einem ersten und zweiten Sonnenrad, drehbar um Achsen auf einem ersten und zweiten Planetenträger angeordnete und aus zwei abgestuften Zahnrädern mit kleinem und großem Durchmesser bestehenden ersten und zweiten Planetenrädern und einem ersten und zweiten Hohlrad sowie jeweils einem im Motor- oder Generatorbetrieb arbeitenden ersten und zweiten Elektromotor enthält. Das um eine Achse rotierende und mit dem Rotor des ersten Elektromotors verbundene erste Sonnenrad kämmt mit den Zahnrädern großen Durchmessers der ersten Planetenräder, während die Zahnräder kleinen Durchmessers mit der Innenverzahnung des ersten Hohlrades kämmen. Der erste Planetenträger ist mit der Antriebswelle verbunden.

Das ebenfalls um die Achse rotierende und mit dem Rotor des zweiten Elektromotors verbundene zweite Sonnenrad kämmt mit den Zahnrädern großen Durchmessers der zweiten Planetenräder, deren Zahnräder kleinen Durchmessers mit dem stationären zweiten Hohlrad kämmen, während der zweite Planetenträger fest mit der abtriebsseitigen Nabe verbunden ist. Die ersten Planetenräder rotieren somit synchron zum zweiten Planetenträger aber mit unterschiedlicher Geschwindigkeit.

Der Stator des ersten Elektromotors ist stationär mit der Achse und der Stator des zweiten Elektromotors stationär mit dem zweiten Hohlrad verbunden.

Im Betrieb dieses Antriebssystems arbeitet der eine der beiden Elektromotoren als Generator und gibt elektrische Leistung an den anderen, als Motor arbeitenden Elektromotor ab, wobei die Größe der elektrischen Leistung von einer Steuereinrichtung bestimmt wird, die somit auch die Geschwindigkeit bestimmt, mit der der als Motor arbeitende Elektromotor rotiert, sodass die Drehzahl der abtriebsseitigen Nabe unabhängig von der Drehzahl der Antriebswelle verändert werden kann. Bei einem Fahrrad mit einem Hybridantrieb kann die Steuereinrichtung zusätzlich elektrische Leistung an den einen oder anderen Elektromotor zur Unterstützung der vom Benutzer aufgebrachten Antriebsleistung abgeben.

Aus der US 2017/259883 A1 ist ein Hybridantrieb für ein Elektrofahrrad bekannt, der in einem Gehäuse einen ersten Motor aufweist, dessen parallel zu einer Tretkurbelwelle des Hybridantriebs angeordnete Motorwelle mit einem Ritzel verbunden ist, das mit der Außenverzahnung eines Zahnrades eines Untersetzungsgetriebe kämmt, das mit einer Planetenachse eines Planetengetriebes verbunden ist, die auf einem Planetenträger angeordnet ist und Planetenräder mit einer Doppelverzahnung trägt. Die Verzahnung der Planetenräder kämmt mit der Verzahnung eines mit dem Rotor eines koaxial mit der Tretkurbelwelle verbundenen zweiten Motors verbundenen Sonnenrades. Die andere Verzahnung der Planetenräder kämmt mit der Innenverzahnung eines mit einem Kettenrad verbundenen Hohlrades. Das Dokument US2017/259883 offenbart eine Hybridantriebseinheit für ein elektrisches Fahrrad gemäß der Präambel von Anspruch 7 und ein Verfahren zum Steuern des Hybridantriebs für ein elektrisches Fahrrad gemäß der Präambel von Anspruch 1.

Ein Controller steuert den ersten Motor und den zweiten Motor in Abhängigkeit von Signalen an, die von einem Drehmomentsensor und einem Fahrradgeschwindigkeitssensor abgegeben werden, so dass je nach Betriebsart des Hybridantriebs das Übersetzungsverhältnis kontinuierlich oder in Stufen entsprechend der Drehgeschwindigkeit des Sonnenrades der den Eingaben an einem Fahrradcomputer verändert bzw. bei entsprechend aufgebrachter Unterstützkraft über die Pedale eine Erhöhung der Drehgeschwindigkeit des ersten Motors begrenzt oder der zweite Motor abgeschaltet und somit der Stromverbrauch verringert wird.

Bei diesem Hybridantrieb ist der als Innen- oder Außenrotormotor ausgebildete zweite Motor Bauart bedingt wesentlich größer als der erste Motor, dessen Motorwelle mit dem Untersetzungsgetriebe verbunden ist, während der zweite Motor unmittelbar mit dem Planetengetriebe gekoppelt ist. Da zum rekuperierenden Bremsen des Elektrofahrrades die Bestimmung des vom Benutzer auf den Tretkurbelantrieb ausgeübten Drehmoments erforderlich ist, eignet sich der aus dem Dokument D2 bekannte Hybridantrieb wegen der unterschiedlichen Elektromotoren auch nicht dazu, das Drehmoment aus der Differenz der q-Komponenten der Motorströme des ersten und zweiten Elektromotors zu bestimmen.

Aus der US 2012/012412 A1 ist ein Hybridantrieb für ein Elektrofahrrad mit einem Tretkurbelantrieb und einem elektrisch mit einer wieder aufladbaren Batterie verbundenen elektromotorischen Antrieb mit zwei als Motoren oder Generatoren betreibbaren Elektromotoren bekannt, deren Motorwellen mit unterschiedlichen Getriebeelementen eines als Planetengetriebe ausgebildeten Überlagerungsgetriebes verbunden sind, das antriebsseitig mit dem Tretkurbelantrieb und abtriebsseitig mit einem Kettenrad eines Kettengetriebes des Elektrofahrrades verbunden ist. Bei dem bekannten Hybridantrieb kämmt das mit der Motorwelle des ersten Motors/Generators verbundene Ritzel mit der Außenverzahnung des Sonnenrades des Planetengetriebes, während das mit der Motorwelle des zweiten Motors/Generators verbundene Ritzel in eine Außenverzahnung eines Hohlrades des Planetengetriebes eingreift. Die Innenverzahnung des Hohlrades und eine zweite Verzahnung des Sonnenrades kämmen mit der Verzahnung von Planetenrädern, die drehbar auf einem mit der Tretkurbelwelle verbundenen Planetenträger angeordnet sind. Das Hohlrad ist über einen ringförmigen Ausgang mit dem Kettenrad gekoppelt.

Da der zweite Motor/Generator etwa doppelt so groß ist wie der erste Motor/Generator, eignet sich der bekannte Hybridantrieb wegen der unterschiedlichen Elektromotoren auch nicht dazu, das zum rekuperierenden Bremsen vom Benutzer auf den Tretkurbelantrieb ausgeübte Drehmoment aus der Differenz der q-Komponenten der Motorströme des ersten und zweiten Elektromotors zu bestimmen.

Aus der US 2016/318577 A1 ist ein Hybridantrieb für ein Elektrofahrrad mit Rücktrittbremse bekannt, der einen Motor, einen den Motor speisenden Akkumulator, eine mit Pedalen verbundene Kurbelwelle, ein Planetengetriebe mit einem Sonnenrad und mindestens einem abgestuften, auf einem Planetenradträger angeordneten Planetenrad mit Doppelverzahnung mit zwei miteinander verbundenen Ritzeln und einem Hohlrad, und einen mit der Kurbelwelle verbundenen Drehmomentsensor aufweist. Der Rotor des Motors und das erste Planetenradritzel sind mit dem Sonnenrad verbunden wobei die Verzahnung des ersten Planetenradritzels an der Innenverzahnung des Hohlrades abwälzt und sich das zweite Planetenradritzel in einem ersten Ringgetriebe dreht, das mit der Kurbelwelle verbunden ist. Ein zweites Ringgetriebe ist mit einem Kettenrad verbunden, das über eine Kette ein Hinterradritzel eines Hinterrades antreibt. Ein elektronisches Steuergerät empfängt Eingangssignale und gibt Signale zur Steuerung einer Vielzahl von Komponenten des Elektrofahrrades, insbesondere Steuerung des Betriebs des Elektromotors ab.

Damit ermöglicht der bekannte Hybridantrieb die Betriebsarten

- Pedalunterstützung, bei der das Drehmoment und optional die Drehzahl, Stellung und Richtung der Kurbelwelle erkannt und in Abhängigkeit vom Drehmoment, der Drehzahl oder Pedalstellung der Elektromotor zugeschaltet wird;

- Freilauf mit sich drehendem Motor, wobei die Kurbelwelle vom Elektromotor ausgekuppelt wird und der Fahrer die Pedale des Elektrofahrrades nicht betätigt;
- Freilauf ohne sich drehendem Motor, wobei die Kurbelwelle vom Elektromotor ausgekuppelt und der Motor nicht mit dem Kettenrad gekoppelt ist;
- Elektronische Rücktrittbremse mit regenerativem Bremsmodus, worin die Drehung der Pedale arretiert und die Kurbelwelle vom Elektromotor ausgekuppelt ist, und der Fahrer eine Kraft entgegen dem Uhrzeigersinn/in Rückwärtsrichtung auf die Pedale ausüben kann, sodass das Drehmomentmessgerät das Reaktionsdrehmoment misst und bewirkt, dass ein rekuperativer Bremsbefehl an den Motor gesendet wird, um so Energie zu erzeugen, die zurück in den Akku geleitet wird,
- Rekuperativer Bremsmodus, worin der Motor das Elektrofahrrad verlangsamt, während ein regenerativer Bremsbefehl an den Motor gesendet wird.

Aus der US 2017/0291660 ist ein Hybridantrieb für ein Elektrofahrrad mit und ohne Freilauffunktion sowie einem Rekuperationsbetrieb bekannt, der ein als Planetengetriebe ausgebildetes Überlagerungsgetriebe aufweist, das sowohl mit zwei Elektromotoren als auch mit einer Kurbelwelle verbunden ist. Der Rotor des ersten Motors ist mit einem Sonnenrad verbunden, das mit Planetenrädern kämmt, die drehbar auf einem Planetenträger angeordnet sind und eine Doppelverzahnung aufweisen, von denen die eine Verzahnung mit einem Hohlrad des Planetengetriebes und die andere Verzahnung mit der Verzahnung des Sonnenrades kämmt. Das Hohlrad ist mit einem Kettenrad verbunden. Die Motorwelle des zweiten Motors ist mit einem Untersetzungsgetriebe verbunden, das aus einem mit der Motorwelle verbundenen Ritzel und einem Zahnrad besteht, das mit der Außenverzahnung des Planetenträgers kämmt.

Der Betrieb dieses Hybridantriebs für ein Elektrofahrrad umfaßt die Betriebsarten
Antrieb des Elektrofahrrads durch Betätigen des Tretkurbelantrieb mit und ohne Unterstützung durch die Elektromotoren,
Antrieb des Elektrofahrrads durch die Elektromotoren,
stufenlose Änderung des Übersetzungsverhältnisses des Antriebsstranges vom Tretkurbelantrieb zum Kettenrad mittels der Elektromotoren,
elektromotorisches Bremsen des Elektrofahrrades,
rekuperatives elektromotorisches Bremsen des Elektrofahrrades mit Ladung des Akkumulators.

Aufgabe der vorliegenden Erfindung ist es, ein Verfahren zum Betrieb eines Hybridantriebs für ein Elektrofahrrad mit und ohne Freilauf- und/oder Rücktrittfunktion mit einem Tretkurbelantrieb anzugeben, das zur variabel schaltbaren Übersetzung, zum rekuperierenden Antrieb und Bremsen mit hohem Wirkungsgrad sowie zur Steuerung der verschiedenen Betriebsarten über ein Interface sowie zum Einsatz in einem Trainingsgerät oder in einem rehabilitationsmedizinischen Gerät geeignet ist und eine Einstellung der verschiedenen Betriebsarten ermöglicht.

Diese Aufgabe wird erfindungsgemäß durch ein Verfahren zum Betrieb eines Hybridantriebs für ein Elektrofahrrad mit und ohne Freilauf- und/oder Rücktrittfunktion mit einem Tretkurbelantrieb mit den Merkmalen des Anspruchs 1 gelöst.

Der für das erfindungsgemäße Verfahren eingesetzte Hybridantrieb für ein Elektrofahrrad weist einen Tretkurbelantrieb, der eine an beiden Enden mit Tretkurbeln verbundene Tretkurbelachse enthält, und einen elektrisch mit einem Akkumulator verbundenen elektromotorischen Antrieb mit zwei Elektromotoren auf, die mit unterschiedlichen Getriebeelementen eines Überlagerungsgetriebes verbunden sind, das antriebsseitig mit dem Tretkurbelantrieb und abtriebsseitig mit dem Kettenrad des Kettengetriebes des Elektrofahrrades verbunden ist, wobei der erste und zweite Elektromotor (2, 3) gleichartig ausgebildet und parallel zur Tretkurbelachse (5) angeordnet sind, dass der erste Elektromotor (2) mit einem ersten Stirnrad (21) eines ersten Untersetzungsgetriebes (21, 22) und der zweite Elektromotor (3) mit einem zweiten Stirnrad (31) eines zweiten Untersetzungsgetriebes (31, 32) verbunden ist, wobei das erste und zweite Stirnrad (21, 31) unterschiedliche Zähnezahl aufweisen und mit einem koaxial zur Tretkurbelachse (5) angeordneten ersten bzw. zweiten Zahnrad (22, 32) des ersten oder zweiten Untersetzungsgetriebes (21, 22;31, 32) kämmen, und ermöglicht die Betriebsarten für ein Elektrofahrrad mit und ohne Freilauffunktion

- Antrieb des Elektrofahrrads durch Betätigen des Tretkurbelantrieb mit und ohne Unterstützung durch den elektromotorischen Antrieb,
- Antrieb des Elektrofahrrads durch den elektromotorischen Antrieb,
- stufenlose oder abgestufte Änderung des Übersetzungsverhältnisses des Antriebsstranges vom Tretkurbelantrieb zum Kettenrad mittels des elektromotorischen Antriebs,
- elektromotorisches Bremsen des Elektrofahrrades,
- rekuperatives elektromotorisches Bremsen des Elektrofahrrades mit Ladung des Ackumulators

Erfindungsgemäß werden diese Betriebsarten durch den Benutzer des Elektrofahrrades an einer mit einer Steuereinrichtung, die mit den Istwerten der Elektromotoren beaufschlagt wird und Sollwerte an die Elektromotoren abgibt, verbundenen Eingabe- und Anzeigevorrichtung eingestellt und durch die Art der Betätigung des Elektrofahrrades durch den Benutzer vorgegeben, wobei die Verstärkung der vom Benutzer an die Tretkurbelachse abgegebenen Leistung mittels der Eingabe- und Anzeigevorrichtung unter Berücksichtigung der an der Eingabe- und Anzeigevorrichtung eingestellten Übersetzung eingestellt wird.

Die Stärke des rekuperativen Bremsens wird bei einem Elektrofahrrad ohne Freilauf insbesondere in Abhängigkeit von der Stärke des entgegen der Drehrichtung des Tretkurbelantriebs für eine Vorwärtsbewegung vom Benutzer auf die Pedale der Tretkurbeln ausgeübten Gegenmoments verändert, während bei einem Elektrofahrrad mit Freilauf und Rücktritt die Stärke des rekuperativen Bremsens von der Stärke des entgegen der Drehrichtung des Tretkurbelantrieb für eine Vorwärtsbewegung vom Benutzer aufgebrachten, auf die Pedale der Tretkurbeln ausgeübten Rücktrittskraft verändert wird.

Vorzugsweise wird die vom Benutzer an den Tretkurbelantrieb abgegebene Leistung unabhängig vom jeweiligen Fahrzustand des Elektrofahrrades eingestellt und in Abhängigkeit vom jeweiligen Fahrzustand des Elektrofahrrades im Motorbetrieb Antriebsleistung vom elektromotorischen Antrieb an das Kettenrad oder im Generatorbetrieb elektrische Leistung vom elektromotorischen Antrieb an den Akkumulator abgegeben.

Das vom Benutzer an die Tretkurbelachse abgegebene Drehmoment wird vorzugsweise aus der q-Komponente des Motorstroms des feldorientiert geregelten ersten Elektromotors abzüglich der q-Komponente des Motorstroms des feldorientiert geregelten zweiten Elektromotors unter Berücksichtigung der Übersetzungen der Elektromotoren und der Übersetzung des Planetengetriebes bestimmt.

In einer bevorzugten Ausführungsform wird beim rekuperierenden Bremsen durch ein Zurückdrehen des Tretkurbelantriebs aus dem Stillstand ein steigendes Pedalreaktionsmoment über den zweiten Elektromotor aufgebaut, das dem Bremsmoment entspricht, wobei die Rekuperation elektrischer Energie über den ersten, im Generatorbetrieb arbeitenden Elektromotor erfolgt.

Bei einem Elektrofahrrad ohne Freilauffunktion kann nach einem weiteren Merkmal der Erfindung die Übersetzung vom Tretkurbelantrieb zum Kettenrad stufenlos oder in Stufen mittels der Eingabe- und Anzeigevorrichtung eingestellt werden.

Sowohl bei einem Elektrofahrrad mit Freilauffunktion als auch bei einem Elektrofahrrad ohne Freilauffunktion kann bei dem erfindungsgemäßen Hybridantrieb die Verstärkung der vom Benutzer an die Tretkurbelachse abgegebenen Leistung gegebenenfalls unter Berücksichtigung der an der Eingabe- und Anzeigevorrichtung eingestellten Übersetzung mittels der Eingabe- und Anzeigevorrichtung eingestellt werden.

Beide vorstehende Verfahren ermöglichen es, die Tretleistung des Benutzers ohne aufwändige Drehmomentsensorik zur Erfassung der auf die Tretkurbelachse ausgeübten Tretleistung zu ermitteln.

Bei einem Elektrofahrrad ohne Freilauffunktion kann ein mechanischer Freilauf durch eine Bestimmung der Position des Rotors des zweiten Elektromotors und durch Nachführen der Drehzahl des mit dem Rotor des ersten Elektromotors verbundenen Kettenrads nachgebildet werden.

Der erfindungsgemäße Hybridantrieb kann auch für Trainings- und Therapiezwecke eingesetzt werden. So kann unter anderem eine konstante physische Belastung des Benutzers für ein kardiologisches Training des Benutzers durch eine Vorgabe des Sollwerts der vom elektromotorischen Antrieb abgegebenen Antriebsleistung in Abhängigkeit von der Herzfrequenz des Benutzers erfolgen, so dass bei steigender Herzfrequenz eine steigende und bei abnehmender Herzfrequenz eine reduzierte elektromotorische Antriebskraft vom elektromotorischen Antrieb an das Überlagerungsgetriebe abgegeben wird. Dabei kann nicht nur durch Zuführen elektrischer Leistung die Belastung des Benutzers vermieden werden, sondern es kann auch durch elektrisches Bremsen bei Bergabfahrt getreten und so die Herzfrequenz im Trainingsbereich gehalten werden.

Ein Hybridantrieb für ein Elektrofahrrad mit einer Eingabe- und Anzeigevorrichtung (9) verbundene Steuereinrichtung (8) zur Durchführung des Verfahrens nach mindestens einem der vorangehenden Ansprüche 1 bis 6, mit einem Tretkurbelantrieb, der eine an beiden Enden mit Tretkurbeln verbundene Tretkurbelachse enthält, einem elektrisch mit einem Akkumulator verbundenen elektromotorischen Antrieb mit einem ersten und zweiten Elektromotor (2, 3), die mit unterschiedlichen Getriebeelementen eines Überlagerungsgetriebes (4) verbunden sind, das antriebsseitig mit dem Tretkurbelantrieb (5, 51, 52) und abtriebsseitig mit einem Kettenrad (6) eines Kettengetriebes des Elektrofahrrades verbunden ist, und wobei der erste und zweite Elektromotor gleichartig ausgebildet und parallel zur Tretkurbelachse angeordnet sind, dass der erste Elektromotor mit einem ersten Stirnrad eines ersten Untersetzungsgetriebes und der zweite Elektromotor mit einem zweiten Stirnrad eines zweiten Untersetzungsgetriebes verbunden ist, wobei das erste und zweite Stirnrad unterschiedliche Zähnezahlen aufweisen und mit einem koaxial zur Tretkurbelachse angeordneten ersten bzw. zweiten Zahnrad des ersten oder zweiten Untersetzungsgetriebes kämmen.

Diese Ausführung des Hybridantriebs für ein Elektrofahrrad ermöglicht es, je nach Betriebsart des Elektrofahrrads einen Elektromotor oder beide Elektromotoren als elektromotorischen Antrieb einzusetzen. In der Betriebsart "Energierückgewinnung" bzw. Rekuperation bei einem Elektrofahrrad ohne Freilauf werden beide Elektromotoren zur Rekuperation genutzt. Daraus ergeben sich hohe Antriebsleistungen und ein hoher Wirkungsgrad, aus dem u.a. eine große Reichweite eines Elektrofahrrads resultiert.

Durch die gleichartige oder identische Ausbildung des ersten und zweiten, parallel zur Tretkurbelachse angeordneten und mit dem ersten bzw. zweiten Stirnrad eines ersten bzw. zweiten Untersetzungsgetriebes verbundenen Elektromotors können dieselben raumsparenden Elektromotoren eingesetzt werden, so dass eine kostengünstige Bauweise gewährleistet ist. Da das erste und zweite Stirnrad mit einem koaxial zur Tretkurbelachse angeordneten ersten bzw. zweiten Zahnrad des ersten bzw. zweiten Untersetzungsgetriebes kämmen und eine unterschiedliche Zähnezahl aufweisen, können das erste und zweite Zahnrad gleichartig ausgeführt werden, was ebenfalls eine kostengünstige Konstruktion mit gleichen Bauteilen ermöglicht.

Vorzugsweise besteht das Überlagerungsgetriebe aus einem Planetengetriebe mit einem Sonnenrad, einem koaxial zum Sonnenrad angeordneten Hohlrad und mindestens einem mit dem Sonnenrad und dem Hohlrad in Eingriff stehenden und drehbar auf einem Planetenradträger angeordneten Planetenrad, wobei in einer ersten Ausführungsform das erste Zahnrad mit dem Sonnenrad und das zweite Zahnrad mit der Tretkurbelachse verbunden ist, die mit dem Planetenradträger gekoppelt und wobei das Hohlrad des Planetengetriebes abtriebseitig mit dem Kettenrad verbunden ist.

In alternativer Ausführungsform ist das erste Zahnrad mit dem Sonnenrad und das zweite Zahnrad mit der Tretkurbelachse verbunden, die mit dem Hohlrad gekoppelt ist, während der Planetenradträger des Planetengetriebes abtriebsseitig mit dem Kettenrad verbunden ist.

Zur Erfassung der Trittfrequenz und Pedallage bzw. Winkelstellung der Tretkurbelachse des vom Benutzer betätigten Tretkurbelantriebs ist ein Rotorlagegeber mit der Tretkurbelachse verbunden, der vorzugsweise aus einem optischen oder magnetischen Sensor besteht, der das mit der Tretkurbelachse verbundene zweite Zahnrad des zweiten Untersetzungsgetriebes als Positionsgeber enthält.

Zur Einstellung unterschiedlicher Betriebsarten des Fahrrads mit und ohne Freilauf- und/oder Rücktrittfunktion weist der Hybridantrieb eine mit den Istwerten der Elektromotoren beaufschlagte und Sollwerte an die Elektromotoren abgebende und mit einer Eingabe- und Anzeigevorrichtung verbundene, vorzugsweise programmierbare Steuereinrichtung auf, wobei die Eingabe- und Anzeigevorrichtung aus einem vorzugsweise am Lenker des Fahrrads angeordneten Drehgriff, einem Wippschalter oder einem berührungsempfindlichen Display besteht und wahlweise als drahtloses Interface ausgebildet ist.

Anhand von in der Zeichnung dargestellten Ausführungsbeispielen soll der der Erfindung zugrundeliegende Gedanke näher erläutert werden. Es zeigen:

Fig. 1    einen Kurzbachplan zur Darstellung des Funktionsprinzips einer ersten Ausführungsform des erfindungsgemäßen Hybridantriebs mit einer Anbindung des Kettenrades an die Hohlwelle eines Planetengetriebes;

Fig. 2    einen Kurzbachplan zur Darstellung des Funktionsprinzips einer zweiten Ausführungsform des erfindungsgemäßen Hybridantriebs mit einer Anbindung des Kettenrades an den Planetenträger eines Planetengetriebes;

Fig. 3    eine schematische Seitenansicht des Hybridantriebs gemäß den Fig. 1 und 2;

Fig. 4    einen schematischen Längsschnitt durch den Hybridantrieb gemäß den Fig. 1 bis 3.

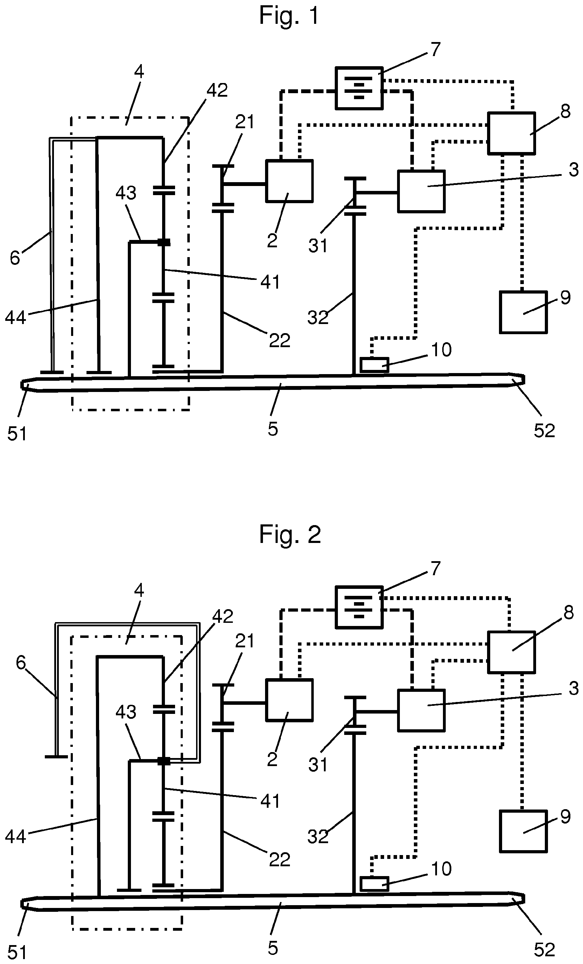

Der in den Fig. 1 bis 4 schematisch dargestellte multifunktionelle Hybridantrieb weist zwei in einem Gehäuse 1 angeordnete, jeweils im Motor- oder Generatorbetrieb arbeitende Elektromotoren 2, 3 sowie eine Tretkurbelachse 5 zur Betätigung mittels Muskelkraft durch einen Benutzer auf, die an ihren Enden Tretkurbelaufnahmen 51, 52 für an ihren entgegengesetzten Enden mit Pedalen versehenen Tretkurbeln enthält. Der erste Elektromotor 2 ist mit einem ersten Untersetzungsgetriebe 21, 22 verbunden, das ein mit dem Rotor des ersten Elektromotors 2 verbundenes erstes Stirnrad 21 und ein mit dem ersten Stirnrad 21 kämmendes erstes Zahnrad 22 enthält und die Rotordrehzahl in einem durch das Übersetzungsverhältnis des ersten Stirnrads 21 zum ersten Zahnrad 22 untersetzt.

Die Verzahnung des ersten Zahnrads 22 kämmt mit der Verzahnung eines Sonnenrades 41 eines Planetengetriebes 4, das neben dem Sonnenrad 41, mindestens ein drehbar auf einer Achse eines Planetenradträgers 43 gelagertes Planetenrad 42, das mit dem Sonnenrad 41 in Verzahnungseingriff steht, und ein Hohlrad 44 aufweist, mit dessen Innenverzahnung die Außenverzahnungen des mindestens einen Planetenrades 42 kämmt.

Der Rotor des zweiten Elektromotors 3 ist mit einem zweiten Stirnrad 31 eines zweiten Untersetzungsgetriebes 31, 32 verbunden, das mit einem zweiten Zahnrad 32 kämmt, das fest mit der Tretkurbelachse 5 verbunden ist. Die Untersetzung der Rotordrehzahl des zweiten Elektromotors 3 wird durch das Übersetzungsverhältnis zwischen dem zweiten Stirnrad 31 und dem zweiten Zahnrad 32 des Untersetzungsgetriebes 31, 32 bestimmt.

Bei dem in Fig. 1 schematisch dargestellten ersten Ausführungsbeispiel ist das Hohlrad 44 des Planetengetriebes 4 mit einem abtriebsseitigen Kettenrad 6 gekoppelt, das in an sich bekannter Weise über eine Kette mit einem üblicherweise am Hinterrad eines Elektrofahrrads angeordneten Antriebsritzel verbunden ist. Der Planetenradträger 43 ist in dieser Ausführungsform mit der Tretkurbelachse 5 verbunden.

Bei dem in Fig. 2 schematisch dargestellten zweiten Ausführungsbeispiel ist der Planetenradträger 43 des Planetengetriebes 4 mit dem abtriebsseitigen Kettenrad 6 gekoppelt, während das Hohlrad 44 des Planetengetriebes 4 in dieser Ausführungsform mit der Tretkurbelachse 5 verbunden ist.

In beiden, in den Fig. 1 und 2 schematisch dargestellten Ausführungsbeispielen sind entsprechend den gestrichelten Linien die beiden Elektromotoren 2, 3 mit einem Akkumulator 7 verbunden, aus dem sie im Motorbetrieb mit elektrischer Energie gespeist werden oder in den sie im Generatorbetrieb elektrische Energie einspeisen. In punktierten Linien sind Steuerleitungen zur Steuerung des Energieflusses zwischen den Elektromotoren 2, 3 und dem Akkumulator 7 mittels einer Steuereinrichtung 8 dargestellt, wobei die Verbindung der Steuereinrichtung 8 mit dem Akkumulator 7 im Wesentlichen der Überwachung des Ladezustandes des Akkumulator 7 dient. Weiterhin ist die Steuereinrichtung 8 über eine ebenfalls punktiert dargestellte Leitung mit einer Eingabe- und Anzeigevorrichtung 9 verbunden, die beispielsweise am Lenker des Elektrofahrrades angeordnet ist und dem Benutzer eine Einstellung der verschiedenen Betriebsarten des Hybridantriebs ermöglicht. Zusätzlich ist die Steuereinrichtung 8 über eine ebenfalls punktiert dargestellte Sensorleitung mit einem als magnetischer oder optoelektronischer Sensor ausgebildeten inkrementellen Rotorlagegeber 10 verbunden, der auf der Tretkurbelachse 5 angeordnet ist und zur Bestimmung der Trittfrequenz des Benutzers und der Stellung der Tretkurbelachse 5 bzw. der mit der Tretkurbelachse 5 über Tretkurbeln verbundenen Pedale dient und hierzu die Verzahnung des zweiten Zahnrades 32 nutzt.

Die Bestimmung des vom Benutzer auf den Tretkurbelantrieb ausgeübten Drehmoments erfolgt aus der Q-Komponente des Motorstroms des feldorientiert geregelten ersten Elektromotors 2 abzüglich der Q-Komponente des Motorstroms des ebenfalls feldorientiert geregelten zweiten Elektromotors 3 ohne weitere Sensorik.

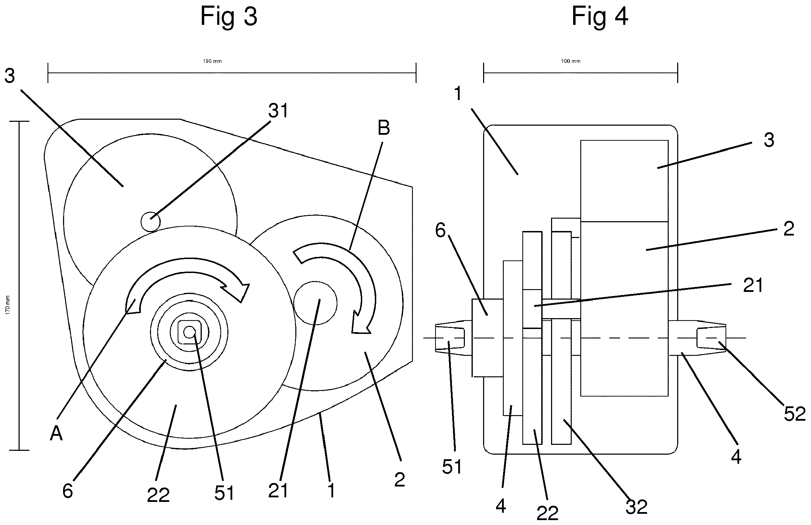

Die Fig. 3 und 4 zeigen in schematischen Darstellungen die räumliche Anordnung des Hybridantriebs innerhalb des Gehäuses 1 und verdeutlichen die raumsparende Konfiguration der Anordnung der beiden jeweils im Motor- und/oder Generatorbetrieb arbeitenden Elektromotoren 2, 3 und der Getriebeelemente der Untersetzungsgetriebe 21, 22 bzw. 31, 32 und des Überlagerungs- bzw. Planetengetriebes 4 innerhalb des Gehäuses 1.

Der in den Fig. 1 bis 4 dargestellte Hybridantrieb ermöglicht folgende Betriebsarten für Elektrofahrräder:

   a) mit und ohne Freilauf:

-   Fahrbetrieb mit elektromotorischem Antrieb und Tretkurbelantrieb mit Steuerung/Einstellung des elektromotorischen Antriebs zur Unterstützung des Tretkurbelantriebs
-   stufenlose Gangschaltung

   b) mit Freilauf

-   Elektromotorisches Bremsen mit und ohne Rekuperation ("elektrisches Bremsen") durch Einstellung an der Eingabe-Anzeigevorrichtung,
-   Elektromotorisches Bremsen mit und ohne Rekuperation durch Betätigen mechanischer Bremsen, beispielsweise durch Betätigen einer Rücktrittbremse

   c) ohne Freilauf

-   Elektromotorisches Bremsen mit und ohne Rekuperation durch ein entgegen der Vorwärts-Drehrichtung gerichteten, auf den Tretkurbelantrieb ausgeübten Drehmoments

   d) Fitness- und Rehabilitations-Fahrrad

Nachfolgend werden ein Teil dieser Betriebsarten anhand der Ausführungsbeispiele gemäß den Fig. 1 bis 4 näher erläutert. Eine erste Funktionsbeschreibung bezieht sich auf den Fahrbetrieb und eine stufenlose Gangschaltung nach Art einer NuVinci-Nabe gemäß a) der vorstehenden bei Elektrofahrrädern mit und ohne Freilauf anwendbaren Betriebsarten.

Wie vorstehend beschrieben, weist der Hybridantrieb zwei bevorzugt gleichartige jeweils im Motor- und/oder Generatorbetrieb arbeitende Elektromotoren 2, 3 auf, die mit unterschiedlichen Stirnrädern 21, 31 auf die koaxial zur Tretkurbelachse 5 angeordnete Zahnräder 22, 32 wirken. Während das mit dem Rotor des ersten Elektromotors 2 verbundene erste Zahnrad 22 mit dem Sonnenrad 41 des nachgeschalteten Planetengetriebes 4 verbunden ist, wirkt das mit dem Rotor des zweiten Elektromotors 3 verbundene zweite Zahnrad 32 auf die Tretkurbelachse 5, die entweder gemäß Fig. 1 mit dem Hohlrad 44 oder gemäß Fig. 2 mit dem Planetenradträger 43 verbunden ist. Der Abtrieb des Planetengetriebes 4 zum Kettenrad 6 erfolgt entweder über das Hohlrad 44 oder den Planetenradträger 43, wobei das Kettenrad 6 das Hinterrad des Elektrofahrrads beispielsweise über eine Kette oder einen Riemen antreibt.

Im Fahrbetrieb treiben der die Tretkurbelachse 5 durch Treten der Pedale antreibende Benutzer und der zweite Elektromotor 3 das mit der Tretkurbelachse 5 und dem zweiten Zahnrad 32 verbunden Hohlrad 44 des Planetengetriebes 4 an, während der erste Elektromotor 2 über das erste Zahnrad 22 das Sonnenrad 41 des Planetengetriebes 4 an treibt, das mit den Planetenrädern 42 gekoppelt ist, wodurch der in der Ausführungsform gemäß Fig. 2 mit dem Kettenrad 6 verbundene Planetenradträger 43 rotiert.

Da der erste Elektromotor 2 bei Erhöhung seiner Drehzahl die Drehzahl und damit Geschwindigkeit des Kettenrades 6 vergrößert, wobei sich die Drehzahl des Planetenradträgers 43 aus der Summe der Drehzahlen des Sonnenrads 41 und des Hohlrads 44 ergibt, bewirkt der erste Elektromotor 2 eine Änderung des Übersetzungsverhältnisses von der Tretkurbelachse 5 zum Kettenrad 6 durch Änderung seiner Drehzahl gegenüber der durch die Trittfrequenz des Benutzers bestimmten Drehzahl der Tretkurbelachse 5. Eine feste, aber variable Übersetzung wie vorstehend beschrieben kann dabei über die Eingabe- und Anzeigevorrichtung 9 vorgegeben werden.

Dabei unterstützt der mit der Tretkurbelachse 5 verbundene zweite Elektromotor 3 die Drehung der Tretkurbelachse 5, so dass die gewünschte Antriebsunterstützung, d.h. der Anteil der elektromotorischen Antriebsleistung im Verhältnis zur Leistung des Tretkurbelantriebs bzw. zu der an das Kettenrad 6 abgegebenen Gesamtleistung einstellt.

Der zweite Elektromotor 3 dient neben der Unterstützung der Tretkurbelleistung auch dem elektromotorischen Bremsen mit und ohne Rekuperation elektrischer Energie, die in den Akkumulator 7 zurückgespeist oder an den ersten Elektromotor 2 abgegeben wird, wenn beispielsweise der Benutzer an der Eingabe- und Anzeigevorrichtung 9 eine elektromotorische Unterstützung abschaltet, der Akkumulator 7 im Fahrbetrieb, beispielsweise auch bei einer Bergabfahrt, geladen werden soll oder der Akkumulator 7 nur noch wenig Ladung aufweist oder entladen ist, der Benutzer aber die stufenlose Gangschaltung nutzen möchte, wozu die weitere Speisung des ersten Elektromotors 2 erforderlich ist.

Zum elektromotorischen Bremsen ohne Rückgewinnung elektrischer Energie bei einem Elektrofahrrad mit Freilauf, dem sogenannten elektrischen Bremsen durch Einstellung an der Eingabe-Anzeigevorrichtung 9 oder durch Rückwärtstreten der Pedale wird ein Bremsmoment aufgebaut, wobei die Tretkurbelachse 5 und der zweite Elektromotor 3 still stehen, das Kettenrad 6 und der erste Elektromotor 2 aber in Richtung der in Fig. 4 eingetragenen Pfeile A und B in Vorwärtsrichtung weiterlaufen. Dabei bringt der erste Elektromotor 2 ein Bremsmoment auf, das der Benutzer über die Pedale abstützen muss, was dem Verhalten einer Rücktrittbremse entspricht.

Bei einem Elektrofahrrad mit Freilauf- und Rücktrittfunktion treten beim Betätigen des Rücktritts dieselben Verhältnisse auf, so dass der mechanische Bremseffekt durch den elektrischen Bremseffekt unterstützt wird.

Beim rekuperierenden Bremsen bei einem Elektrofahrrad mit Freilauf sowie mit und ohne Rücktrittfunktion wird beim Rückdrehen der Pedale ein steigendes Pedalreaktionsmoment über den mit der Tretkurbelachse 5 wirkverbundenen zweiten Elektromotor 3 aufgebaut, das dem Bremsmoment entspricht. Die Rückspeisung elektrischer Energie in den Akkumulator 7 erfolgt - wie vorstehend beschrieben - durch den im Generatorbetrieb laufenden ersten Elektromotor 2.

Mit dem elektromotorischen Bremsen oder "elektrischen Rücktritt" wird eine verschleißfreie Bremse mit Rekuperation zur Verfügung gestellt, die die Reichweite eines Elektrofahrrades im zweistelligen Prozentbereich erhöht.

Bei einem Elektrofahrrad ohne Freilauf bzw. mit fester Übersetzung (sog. "Fixie"), d.h. einer starren Anbindung des Hinterrades am Kettenrad 6 ohne Freilaufnabe werden die Pedale im Fahrbetrieb des Elektrofahrrades permanent mitgedreht. Der erfindungsgemäße Hybridantrieb ermöglicht eine Nachbildung des mechanischen Freilaufs durch die Bestimmung der Position des Rotors des zweiten Elektromotors 3 und durch ein Nachführen der Drehzahl des Kettenrads 6 durch den ersten Elektromotor 2 gemäß

$$n_2 = \frac{\dfrac{Zs}{Zh}}{\dfrac{Zs}{Zh}\dfrac{Z21}{Z32}} \, n_6$$

mit n2 der Drehzahl des ersten Elektromotors 2, Zs der Zähnezahl des Sonnenrades 41, Zh der Zähnezahl des Hohlrades 44, $Z_{21}$ der Zähnezahl des ersten Stirnrades 21, $Z_{32}$ der Zähnezahl des zweiten Zahnrades 32 und $n_6$ der Drehzahl des Kettenrades 6. Vorzugsweise wird ein Planetengetriebe 4 mit einem Verhältnis der Zähnezahl des Sonnenrad 41 zur Zähnezahl des Hohlrad 44 von 1:2,9 bis 1:3,2 eingesetzt.

Zum Bremsen des Elektrofahrrads muss ein negatives, d.h. ein entgegen dem Drehmoment, das für ein Vorwärtsfahren erforderlich ist, gerichtetes Drehmoment durch den Benutzer an den mitdrehenden Pedalen aufgebracht werden. Das benutzerseitige Bremsmoment wird bei diesem rekuperierenden Bremsbetrieb durch den zweiten Elektromotor 3 verstärkt, wobei der Vorteil im generatorischen Leistungsfluss über beide Elektromotoren 2, 3 liegt. Die Übersetzung wird durch die Vorgabe der Drehzahl n2 des ersten Elektromotors 2 mit der über den zweiten Elektromotor 3 erfassten Drehzahl der vom Benutzer auf die Tretkurbelachse 5 ausgeübten Trittfrequenz definiert, wobei die Trittfrequenz des Benutzers in die Drehzahl des Kettenrades 6 mit

$$\ddot{u} = \frac{Zs}{Zh} + 1$$

übersetzt wird, worin Zs die Zähnezahl des Sonnenrades 41 und Zh der Zähnezahl des Hohlrades 44 darstellt. Das Planetengetriebe führt die Drehzahl $n_2$ mit der Übersetzung

$$ü = \frac{Zs\, Z21}{Zh\, Z32}$$

zu, woraus sich für eine Übersetzung ins Schnelle mit dem Faktor ü = 2 beispielsweise eine Drehzahl $n_2$ des ersten Elektromotor 2 von

$$n_2 = \frac{\frac{Zs}{Zh}+1}{\frac{Zs\, Z21}{Zh\, Z32}}\ n_{Benutzer}$$

mit Zs der Zähnezahl des Sonnenrades 41, Zh der Zähnezahl des Hohlrades 44, $Z_{21}$ der Zähnezahl des ersten Stirnrades 21, $Z_{32}$ der Zähnezahl des zweiten Zahnrades 32 und $n_{Benutzer}$ der vom Benutzer an die Tretkurbelachse 5 bzw. das Kettenrades 6 abgegebene Drehzahl bzw. Trittfrequenz ist.

Für eine Untersetzung ins Langsame muss der erste Elektromotor 2 seine Drehrichtung ändern, damit die Abtriebsdrehzahl abgesenkt wird. Daraus ergibt sich für eine Untersetzung des Antriebs ins Langsame auf ü = 0,5 eine Drehzahl n2 des erste Elektromotors 2 in Abhängigkeit von der Trittfrequenz nBenutzer von

$$n_2 = -\frac{1}{2}\frac{\frac{Zs}{Zh}+1}{\frac{Zs\, Z21}{Zh\, Z32}}\ n_{Benutzer}$$

Bei diesem Ausführungsbeispiel wird über eine Unter- und Übersetzung von ü = 0,5 - 2 bereits eine Spreizung des Getriebes um den Faktor 4 erreicht. Diese Betriebsweise ermöglicht

- eine Einstellung einer festen Übersetzung bei einem Elektrofahrrad ohne Freilauf,
- eine Einstellung der Verstärkung der Tretleistung des Benutzers bei fester Übersetzung,
- eine Einstellung der Verstärkung der Tretleistung des Benutzers bei variabler, gewählter Übersetzung

jeweils mittels einer Eingabe- und Anzeigevorrichtung 9 in Form beispielsweise eines als Drehgriff, Wippschalter oder berührungsempfindliches Display ausgebildeten Interfaces.

In der Betriebsart "Fitnessrad" verstärkt oder schwächt der Hybridantrieb über den zweiten Elektromotor 3 das vom Benutzer aufgebrachte Drehmoment an der Tretkurbelachse 5, so dass es möglich ist, die Benutzerleistung unabhängig vom Fahrzustand zu wählen. Dadurch kann der Benutzer beispielsweise bei einer Bergabfahrt weiter die Pedale treten um sich für ein optimales Training konstant zu belasten, wobei die vom Benutzer aufgebrachte überschüssige Energie als elektrische Energie in den Akkumulator 7 zurückgespeist wird.

In der Betriebsart "Rehabilitationsrad" wird für ein Kardiotraining die elektromotorische Antriebsleistung durch die Puls- bzw. Herzfrequenz des Patienten gesteuert, die vorzugsweise mittels eines am Patienten angebrachten, die Puls- bzw. Herzfrequenz des Patienten erfassenden Senders drahtlos zu einem in die Steuereinrichtung 8 oder Eingabe- und Anzeigevorrichtung 9 integrierten Empfänger übertragen wird, so dass durch entsprechende Anpassung der elektromotorischen Antriebsleistung eine konstante Belastung des Patienten erzielt wird.

Zur Erfassung des vom Benutzer an die Tretkurbelachse 5 abgegebenen Drehmoments wird die q-Komponente des Motorstroms des feldorientiert geregelten ersten Elektromotors 2 abzüglich der q-Komponente des Motorstroms des feldorientiert geregelten zweiten Elektromotors 3 unter Berücksichtigung der Übersetzungen ü1 und ü2 des ersten und zweiten Elektromotors 2, 3 und der Übersetzung üp des Planetengetriebes 4 entsprechend

$$M_{Benutzer} = \frac{3}{2}\left(\Psi_{M1ds}\, i_{sq} - \Psi_{M1qs}\, i_{sd}\right) üp * ü1 - \frac{3}{2}\left(\Psi_{M2ds}\, i_{sq} - \Psi_{M2qs}\, i_{sd}\right) ü2$$

eingesetzt, wobei die Übersetzung des Planetengetriebes

$$\ddot{u}p = \frac{1 + Zh}{Zs}$$

beträgt mit Zh der Zähnezahl des Hohlrades 44, Zs der Zähnezahl des Sonnenrades 41 des Planetengetriebes 4, $\psi$M1 dem Fluss des ersten Elektromotors 2, $\psi$M2 dem Fluss des zweiten Elektromotors 3 sowie $i_{sq}$ und $i_{sd}$ den Strömen in Rotorkoordinaten der feldorientierten Regelung.

Bezugszeichenliste

| 1 | Gehäuse |
|---|---|
| 2 | Erster Elektromotor |
| 3 | Zweiter Elektromotor |
| 4 | Planetengetriebe |
| 5 | Tretkurbelachse |
| 6 | Kettenrad |
| 7 | Akkumulator |
| 8 | Steuereinrichtung |
| 9 | Eingabe- und Anzeigevorrichtung |
| 10 | Rotorlagegeber |
| 21 | erstes Stirnrad |
| 22 | erstes Zahnrad |
| 31 | zweites Stirnrad |
| 32 | zweites Zahnrad |
| 41 | Sonnenrad |
| 42 | Planetenrad |
| 43 | Planetenradträger |
| 44 | Hohlrad |
| 51, 52 | Tretkurbelaufnahmen |
| Zh | Zähnezahl des Hohlrades |
| Zs | Zähnezahl des Sonnenrades |
| $\psi$M1 | Fluss des ersten Elektromotors |
| $\psi$M2 | Fluss des zweiten Elektromotors |
| $i_{sq}$, $i_{sd}$ | Ströme in Rotorkoordinaten der feldorientierten Regelung |

**Patentansprüche**

1. Verfahren zum Betrieb eines Hybridantriebs für ein Elektrofahrrad mit und ohne Freilauf- und/oder Rücktrittfunktion mit einem Tretkurbelantrieb, der eine an beiden Enden mit Tretkurbeln (51, 52) verbundene Tretkurbelachse (40) enthält, einem elektrisch mit einem Akkumulator (7) verbundenen elektromotorischen Antrieb mit einem ersten und zweiten Elektromotor (2, 3), die mit unterschiedlichen Getriebeelementen eines Überlagerungsgetriebes (4) verbunden sind, das antriebsseitig mit dem Tretkurbelantrieb (5, 51, 52) und abtriebsseitig mit einem Kettenrad (6) eines Kettengetriebes des Elektrofahrrades verbunden ist, wobei der erste und zweite Elektromotor (2, 3) gleichartig ausgebildet und parallel zur Tretkurbelachse (5) angeordnet sind, dass der erste Elektromotor (2) mit einem ersten Stirnrad (21) eines ersten Untersetzungsgetriebes (21, 22) und der zweite Elektromotor (3) mit einem zweiten Stirnrad (31) eines zweiten Untersetzungsgetriebes (31, 32) verbunden ist, wobei das erste und zweite Stirnrad (21, 31) unterschiedliche Zähnezahl aufweisen und mit einem koaxial zur Tretkurbelachse (5) angeordneten ersten bzw. zweiten Zahnrad (22, 32) des ersten oder zweiten Untersetzungsgetriebes (21, 22;31, 32) kämmen, und in den Betriebsarten

    - Antrieb des Elektrofahrrads durch Betätigen des Tretkurbelantrieb (5, 51, 52) mit und ohne Unterstützung durch den elektromotorischen Antrieb (2, 3),
    - Antrieb des Elektrofahrrads durch den elektromotorischen Antrieb (2, 3),
    - stufenlose Änderung des Übersetzungsverhältnisses des Antriebsstranges vom Tretkurbelantrieb (5, 51, 52) zum Kettenrad (6) mittels des elektromotorischen Antriebs (2, 3),

- elektromotorisches Bremsen des Elektrofahrrades,
- rekuperatives elektromotorisches Bremsen des Elektrofahrrades mit Ladung des Akkumulators (7),

**dadurch gekennzeichnet,**
**dass** die Betriebsarten durch den Benutzer des Elektrofahrrades an einer mit einer Steuereinrichtung (8), die mit den Istwerten der Elektromotoren (2, 3) beaufschlagt wird und Sollwerte an die Elektromotoren (2, 3) abgibt, verbundenen Eingabe- und Anzeigevorrichtung (9) eingestellt und durch die Art der Betätigung des Elektrofahrrades durch den Benutzer vorgegeben werden, wobei die Verstärkung der vom Benutzer an die Tretkurbelachse (5) abgegebenen Leistung mittels der Eingabe- und Anzeigevorrichtung (9) unter Berücksichtigung der an der Eingabe- und Anzeigevorrichtung (9) eingestellten Übersetzung eingestellt wird.

2. Verfahren nach Anspruch 1 für ein Elektrofahrrad ohne Freilauffunktion, **dadurch gekennzeichnet, dass** die Stärke des rekuperativen Bremsens von der Stärke des entgegen der Drehrichtung des Tretkurbelantriebs (5, 51, 52) für eine Vorwärtsbewegung vom Benutzer auf die Pedale der Tretkurbeln (51, 52) ausgeübten Gegenmoments und/oder der auf die Pedale der Tretkurbeln (51, 52) ausgeübten Rücktrittskraft verändert wird.

3. Verfahren nach Anspruch 1 oder 2, **dadurch gekennzeichnet, dass** die vom Benutzer an den Tretkurbelantrieb (5, 51, 52) abgegebene Leistung unabhängig vom jeweiligen Fahrzustand des Elektrofahrrades eingestellt und in Abhängigkeit vom jeweiligen Fahrzustand des Elektrofahrrades im Motorbetrieb Antriebsleistung vom elektromotorischen Antrieb (2, 3) an das Kettenrad (6) oder im Generatorbetrieb elektrische Leistung vom elektromotorischen Antrieb (2, 3) an den Akkumulator (7) abgegeben wird.

4. Verfahren nach mindestens einem der vorangehenden Ansprüche, **dadurch gekennzeichnet, dass** das vom Benutzer an die Tretkurbelachse (5) abgegebene Drehmoment aus der q-Komponente des Motorstroms des feldorientiert geregelten ersten Elektromotors (2) abzüglich der q-Komponente des Motorstroms des feldorientiert geregelten zweiten Elektromotors (3) unter Berücksichtigung der Übersetzungen (ü1, ü2) der Elektromotoren (2, 3) und der Übersetzung (üp) des Planetengetriebes (4) entsprechend

$$M_{Benutzer} = \frac{3}{2}\left(\Psi_{M1ds}i_{sq} - \Psi_{M1qs}i_{sd}\right)\ddot{u}p * \ddot{u}1 - \frac{3}{2}\left(\Psi_{M2ds}i_{sq} - \Psi_{M2qs}i_{sd}\right)\ddot{u}2$$

bestimmt wird, wobei

$$\ddot{u}p = \frac{1 + Zh}{Zs}$$

beträgt mit Zh der Zähnezahl des Hohlrades (44), Zs der Zähnezahl des Sonnenrades (41) des Planetengetriebes (4), $\psi_{M1}$ dem Fluss des ersten Elektromotors (2), $\psi_{M2}$ dem Fluss des zweiten Elektromotors (3), $i_{sq}$ und $i_{sd}$ den Strömen in Rotorkoordinaten der feldorientierten Regelung.

5. Verfahren nach mindestens einem der vorangehenden Ansprüche, **dadurch gekennzeichnet, dass** beim rekuperierenden Bremsen durch ein Zurückdrehen des Tretkurbelantriebs (5, 51, 52) aus dem Stillstand ein steigendes Pedalreaktionsmoment über den zweiten Elektromotor (3) aufgebaut wird, das dem Bremsmoment entspricht, wobei die Rekuperation elektrischer Energie über den ersten, im Generatorbetrieb arbeitenden Elektromotor (2) erfolgt.

6. Verfahren nach mindestens einem der vorangehenden Ansprüche für ein Elektrofahrrad ohne Freilauffunktion, **dadurch gekennzeichnet, dass** ein mechanischer Freilauf durch eine Bestimmung der Position des Rotors des zweiten Elektromotors (3) und durch Nachführen der Drehzahl des mit dem Rotor des ersten Elektromotors (2) verbundenen Kettenrads (6) nachgebildet wird.

7. Hybridantrieb für ein Elektrofahrrad mit einem Tretkurbelantrieb, der eine an beiden Enden mit Tretkurbeln verbundene Tretkurbelachse enthält, einem elektrisch mit einem Akkumulator verbundenen elektromotorischen Antrieb mit einem ersten und zweiten Elektromotor (2, 3), die mit unterschiedlichen Getriebeelementen eines Überlagerungsgetriebes (4) verbunden sind, das antriebsseitig mit dem Tretkurbelantrieb (5, 51, 52) und abtriebsseitig mit einem Kettenrad (6) eines Kettengetriebes des Elektrofahrrades verbunden ist, wobei der erste und zweite Elektromotor (2, 3) gleichartig ausgebildet und parallel zur Tretkurbelachse (5) angeordnet sind, dass der erste Elektromotor (2) mit einem ersten Stirnrad (21) eines ersten Untersetzungsgetriebes (21, 22) und der zweite Elektromotor (3) mit einem zweiten Stirnrad (31) eines zweiten Untersetzungsgetriebes (31, 32) verbunden ist, wobei das erste und zweite Stirnrad (21, 31) unterschiedliche Zähnezahlen aufweisen und mit einem koaxial zur Tretkurbelachse (5) angeordneten ersten bzw. zweiten Zahnrad (22, 32) des ersten oder zweiten Untersetzungsgetriebes (21, 22; 31, 32) kämmen, und **dadurch gekennzeichnet** mit einer Eingabe- und Anzeigevorrichtung (9) verbundene Steuereinrichtung (8) zur Durchführung des Verfahrens nach mindestens einem der vorangehenden Ansprüche 1 bis 6.

8. Hybridantrieb nach Anspruch 7, **dadurch gekennzeichnet, dass** das Überlagerungsgetriebe aus einem Planetengetriebe (4) mit einem Sonnenrad (41), einem koaxial zum Sonnenrad (41) angeordneten Hohlrad (44) und mindestens einem mit dem Sonnenrad (41) und dem Hohlrad (44) in Eingriff stehenden und drehbar auf einem Planetenradträger (43) angeordneten Planetenrad (42) besteht, dass das erste Zahnrad (22) mit dem Sonnenrad (41) und das zweite Zahnrad (32) mit der Tretkurbelachse (5) verbunden ist, die mit dem Planetenradträger (43) gekoppelt ist und dass das Hohlrad (44) des Planetengetriebes (4) abtriebseitig mit dem Kettenrad (6) verbunden ist.

9. Hybridantrieb nach Anspruch 7, **dadurch gekennzeichnet, dass** das Überlagerungsgetriebe aus einem Planetengetriebe (4) mit einem Sonnenrad (41), einem koaxial zum Sonnenrad (41) angeordneten Hohlrad (44) und mindestens einem mit dem Sonnenrad (41) und dem Hohlrad (44) in Eingriff stehenden und drehbar auf einem Planetenradträger (43) angeordneten Planetenrad (42) besteht, dass das erste Zahnrad (22) mit dem Sonnenrad (41) und das zweite Zahnrad (32) mit der Tretkurbelachse (5) verbunden ist, die mit dem Hohlrad (44) gekoppelt ist und dass der Planetenradträger (43) des Planetengetriebes (4) abtriebseitig mit dem Kettenrad (6) verbunden ist.

10. Hybridantrieb nach Anspruch 7, **gekennzeichnet durch** einen mit der Tretkurbelachse (5) verbundenen Rotorlagegeber (10) zur Erfassung der Trittfrequenz und Drehrichtung des vom Benutzer betätigten Tretkurbelantriebs (5, 51, 52).

11. Hybridantrieb nach Anspruch 10, **dadurch gekennzeichnet, dass** der Rotorlagegeber (10) aus einem optischen oder magnetischen Sensor besteht, der das mit der Tretkurbelachse (5) verbundene zweite Zahnrad (32) des zweiten Untersetzungsgetriebes (31, 32) als Positionsgeber enthält.

12. Hybridantrieb nach Anspruch 7, **dadurch gekennzeichnet, dass** die Steuereinrichtung (8) programmierbar ist und dass die Eingabe- und Anzeigevorrichtung (9) aus einem vorzugsweise am Lenker des Fahrrads angeordneten Drehgriff, einem Wippschalter oder einem berührungsempfindlichen Display besteht.

**Claims**

1. A method for operating a hybrid drive for an electric bicycle with and without freewheel and/or backpedal function, comprising a pedal crank drive which contains a pedal crank axle (40) connected to pedal cranks (51, 52) at both ends, an electromotive drive electrically connected to an accumulator (7) with a first and a second electric motor (2, 3), which are connected to different transmission elements of a superposition transmission (4), which on the drive side is connected to the pedal crank drive (5, 51, 52) and on the output side is connected to the sprocket (6) of a chain drive of the electric bicycle, wherein the first and the second electric motor (2, 3) are configured identically and are arranged parallel to the pedal crank axle (5), that the first electric motor (2) is connected to a first spur gear (21) of a first reduction gear (21, 22) and the second electric motor (3) is connected to a second spur gear (31) of a second reduction gear (31, 32), wherein the first and the second spur gear (21, 31) have a different number of teeth and mesh with a first or second gear wheel (22, 32) of the first or second reduction gear (21, 22; 31, 32) arranged coaxially to the pedal crank axle (5), and in the operating modes

   - drive of the electric bicycle by actuating the pedal crank drive (5, 51, 52) with and without support by the electromotive drive (2, 3),
   - drive of the electric bicycle by the electromotive drive (2, 3),
   - stepless change of the gear ratio of the drive train from the pedal crank drive (5, 51, 52) to the sprocket (6) by means of the electromotive drive (2, 3),
   - electromotive braking of the electric bicycle,
   - recuperative electromotive braking of the electric bicycle with charging of the accumulator (7),

   **characterized in**

**that** the operating modes are adjusted by the user of the electric bicycle on an input and display device (9) connected to a control device (8), which is supplied with the actual values of the electric motors (2, 3) and outputts setpoint values to the electric motors (2, 3), and are specified by the kind of actuation of the electric bicycle by the user, wherein the amplification of the power output by the user to the pedal crank axle (5) is adjusted by means of the input and display device (9) by taking account of the gear ratio set at the input and display device (9).

2. The method according to claim 1 for an electric bicycle without freewheel function, **characterized in that** the intensity of the recuperative braking is varied by the intensity of the counter torque exerted by the user on the pedals of the pedal cranks (51, 52) against the direction of rotation of the pedal crank drive (5, 51, 52) for a forward movement and/or by the backpedal force exerted on the pedals of the pedal cranks (51, 52).

3. The method according to claim 1 or 2, **characterized in that** the power output by the user to the pedal crank drive (5, 51, 52) is adjusted independent of the respective driving condition of the electric bicycle, and in dependence on the respective driving condition of the electric bicycle in the motor mode drive power is output from the electromotive drive (2, 3) to the sprocket (6) or in the generator mode electric power is output from the electromotive drive (2, 3) to the accumulator (7).

4. The method according to at least one of the preceding claims, **characterized in that** the torque output by the user to the pedal crank axle (5) correspondingly is determined from the Q component of the motor current of the field-oriented controlled first electric motor (2) minus the Q component of the motor current of the field-oriented controlled second electric motor (3) by taking account of the gear ratios (ü1, ü2) of the electric motors (2, 3) and the gear ratio (üp) of the planetary transmission (4), corresponding to

$$M_{user} = \frac{3}{2}\left(\Psi_{M1ds}i_{sq} - \Psi_{M1qs}i_{sd}\right)\ddot{u}p * \ddot{u}1 - \frac{3}{2}\left(\Psi_{M2ds}i_{sq} - \Psi_{M2qs}i_{sd}\right)\ddot{u}2$$

wherein

$$\ddot{u}p = \frac{1 + Zh}{Zs}$$

with Zh representing the number of teeth of the internal gear (44), Zs the number of teeth of the sun gear (41) of the planetary transmission (4), $\psi_{M1}$ the flux of the first electric motor (2), $\psi_{M2}$ the flux of the second electric motor (3), $i_{sq}$ and $i_{sd}$ the flows in rotor coordinates of the field-oriented control.

5. The method according to at least one of the preceding claims, **characterized in that** the recuperating braking involves the build-up of a rising pedal reaction moment via the second electric motor (3) by turning back the pedal crank drive (5, 51, 52) from standstill, which pedal reaction moment corresponds to the braking moment, wherein the recuperation of electric energy is effected via the first electric motor (2) operating in the generator mode.

6. The method according to at least one of the preceding claims for an electric bicycle without freewheel function, **characterized in that** a mechanical freewheel is reproduced by determining the position of the rotor of the second electric motor (3) and by tracking the rotational speed of the sprocket (6) connected to the rotor of the first electric motor (2).

7. A hybrid drive for an electric bicycle comprising a pedal crank drive which contains a pedal crank axle connected to pedal cranks at both ends, an electromotive drive electrically connected to an accumulator with a first and a second electric motor (2, 3), which are connected to different transmission elements of a superposition transmission (4), which on the drive side is connected to the pedal crank drive (5, 51, 52) and on the output side is connected to the sprocket (6) of a chain drive of the electric bicycle, wherein the first and the second electric motor (2, 3) are configured identically and are arranged parallel to the pedal crank axle (5), that the first electric motor (2) is connected to a first spur gear (21) of a first reduction gear (21, 22) and the second electric motor (3) is connected to a second spur gear (31) of a second reduction gear (31, 32), wherein the first and the second spur gear (21, 31) have a different number of teeth and mesh with a first or second gear wheel (22, 32) of the first or second reduction gear (21, 22; 31, 32) arranged coaxially to the pedal crank axle (5), **characterized by**

a control device (8) which is connected to an input and display device (9) for implementation the method according to at least one of the preceding claims.

8.  The hybrid drive according to claim 7, **characterized in that** the superposition transmission consists of a planetary transmission (4) with a sun gear (41), an internal gear (44) arranged coaxially to the sun gear (41), and at least one planetary gear (42) in engagement with the sun gear (41) and the internal gear (44) and rotatably arranged on a planetary gear carrier (43), that the first gear wheel (22) is connected to the sun gear (41) and the second gear wheel (32) is connected to the pedal crank axle (5), which is coupled to the planetary gear carrier (43), and that on the output side the internal gear (44) of the planetary transmission (4) is connected to the sprocket (6).

9.  The hybrid drive according to claim 7, **characterized in that** the superposition transmission consists of a planetary transmission (4) with a sun gear (41), an internal gear (44) arranged coaxially to the sun gear (41), and at least one planetary gear (42) in engagement with the sun gear (41) and the internal gear (44) and rotatably arranged on a planetary gear carrier (43), that the first gear wheel (32) is connected to the sun gear (41) and the second gear wheel (32) is connected to the pedal crank axle (5), which is coupled to the internal gear (44), and that on the output side the planetary gear carrier (43) of the planetary transmission (4) is connected to the sprocket (6).

10. The hybrid drive according to claim 7, **characterized by** a rotor position encoder (10) connected to the pedal crank axle (5) for detecting the pedaling frequency and direction of rotation of the pedal crank drive (5, 51, 52) actuated by the user.

11. The hybrid drive according to claim 10, **characterized in that** the rotor position encoder (10) consists of an optical or magnetic sensor that contains the second gear wheel (32) of the second reduction gear (31, 32) connected to the pedal crank axle (5) as a position encoder.

12. The hybrid drive according to claim 7, **characterized in that** the control device (8) is programmable and that the input and display device (9) consists of a turning handle preferably arranged on the handlebar of the bicycle, a rocker switch or a touch-sensitive display.

## Revendications

1.  Procédé pour faire fonctionner un entraînement hybride pour une bicyclette électrique avec ou sans fonction de roue libre et/ou fonction de recul avec un mécanisme de manivelle de pédalier, qui contient un axe de manivelle de pédalier (40) relié au niveau des deux extrémités à des manivelles de pédalier (51, 52), un entraînement électromotorisé relié de manière électrique à un accumulateur (7) avec un premier et un deuxième moteur électrique (2, 3), qui sont reliés à différents éléments de transmission d'une transmission à superposition (4), qui est reliée côté entraînement au mécanisme de manivelle de pédalier (5, 51, 52) et côté sortie à un plateau (6) d'une transmission à chaîne de la bicyclette électrique,
dans lequel le premier et le deuxième moteur électrique (2, 3) sont réalisés de manière similaire et sont disposés de manière parallèle par rapport à l'axe de manivelle de pédalier (5), que le premier moteur électrique (2) est relié à une première roue droite (21) d'un premier démultiplicateur (21, 22) et le deuxième moteur électrique (3) est relié à une deuxième roue droite (31) d'un deuxième démultiplicateur (31, 32), dans lequel la première et la deuxième roue droite (21, 31) présentent des nombres de dents différents et s'engagent avec une première ou deuxième roue dentée (22, 32), disposée de manière coaxiale par rapport à l'axe de manivelle de pédalier (5), du premier ou du deuxième démultiplicateur (21, 22 ; 31, 32), et dans les types de fonctionnement

- d'entraînement de la bicyclette électrique en actionnant le mécanisme de manivelle de pédalier (5, 51, 52) avec ou sans assistance par l'entraînement (2, 3) électromotorisé,
- d'entraînement de la bicyclette électrique par l'entraînement (2, 3) électromotorisé,
- de modification continue du rapport de multiplication de la chaîne cinématique du mécanisme de manivelle de pédalier (5, 51, 52) vers le plateau (6) au moyen de l'entraînement (2, 3) électromotorisé,
- de freinage électromotorisé de la bicyclette électrique,
- de freinage électromotorisé à récupération de la bicyclette électrique avec charge de l'accumulateur (7),

**caractérisé en ce**
**que** les types de fonctionnement sont réglés par l'utilisateur de la bicyclette électrique au niveau d'un dispositif d'entrée et d'affichage (9) relié à un système de commande (8), qui est sollicité avec les valeurs réelles des moteurs électriques (2, 3) et envoie des valeurs de consigne aux moteurs électriques (2, 3) et sont spécifiés par le type de l'actionnement de la bicyclette électrique par l'utilisateur, dans lequel l'amplification de la puissance fournie par l'utilisateur à l'axe de manivelle de pédalier (5) est réglée au moyen du dispositif d'entrée et d'affichage (9) en tenant compte de la multiplication réglée au niveau du dispositif d'entrée et d'affichage (9).

2. Procédé selon la revendication 1 pour une bicyclette électrique sans fonction de roue libre, **caractérisé en ce que** l'intensité du freinage à récupération est modifiée par l'intensité du contre-couple exercé par l'utilisateur sur les pédales des manivelles de pédalier (51, 52) dans le sens opposé à la direction de rotation du mécanisme de manivelle de pédalier (5, 51, 52) pour une marche avant et/ou de la force de recul exercée sur les pédales des manivelles de pédalier (51, 52).

3. Procédé selon la revendication 1 ou 2, **caractérisé en ce que** la puissance fournie par l'utilisateur au mécanisme de manivelle de pédalier (5, 51, 52) est réglée indépendamment de l'état de conduite concerné de la bicyclette électrique et, en fonction de l'état de conduite concerné de la bicyclette électrique, une puissance d'entraînement est fournie dans le mode de fonctionnement en moteur par l'entraînement (2, 3) électromotorisé au plateau (6) ou une puissance électrique est fournie dans le mode de fonctionnement en générateur par l'entraînement (2, 3) électromotorisé à l'accumulateur (7).

4. Procédé selon au moins l'une quelconque des revendications précédentes, **caractérisé en ce que** le couple de rotation fourni par l'utilisateur à l'axe de manivelle de pédalier (5) est défini à partir de la composante q du courant de moteur du premier moteur électrique (2) régulé avec orientation de champ moins la composante q du courant de moteur du deuxième moteur électrique (3) régulé avec orientation de champ en tenant compte des multiplications (ü1, ü2) des moteurs électriques (2, 3) et de la multiplication (üp) de l'engrenage planétaire (4) conformément à

$$M_{utilisateur} = \frac{3}{2}\left(\Psi_{M1ds}i_{sq} - \Psi_{M1qs}i_{sd}\right)\ddot{u}p * \ddot{u}1 - \frac{3}{2}\left(\Psi_{M2ds}i_{sq} - \Psi_{M2qs}i_{sd}\right)\ddot{u}2 \quad ,$$

dans lequel

$$\ddot{u}p = \frac{1 + Zh}{Zs}$$

avec Zh étant le nombre de dents de la couronne (44), Zs le nombre de dents de la roue solaire (41) de l'engrenage planétaire (4), $\psi_{M1}$ le flux du premier moteur électrique (2), $\psi_{M2}$ le flux du deuxième moteur électrique (3), $i_{sq}$ et $i_{sd}$ les courants dans des coordonnées de rotor de la régulation avec orientation de champ.

5. Procédé selon au moins l'une quelconque des revendications précédentes, **caractérisé en ce que** lors du freinage à récupération par un retour en arrière par rotation du mécanisme de manivelle de pédalier (5, 51, 52) depuis l'état d'arrêt, un couple de réaction de pédale croissant est élaboré par l'intermédiaire du deuxième moteur électrique (3), qui correspond au couple de freinage, dans lequel la récupération de l'énergie électrique est effectuée par l'intermédiaire du moteur électrique (2) fonctionnant dans le mode de fonctionnement en générateur.

6. Procédé selon au moins l'une quelconque des revendications précédentes pour une bicyclette électrique sans fonction de roue libre, **caractérisé en ce qu'**une roue libre mécanique est reproduite par une définition de la position du rotor du deuxième moteur électrique (3) et par suivi de la vitesse de rotation du plateau (6) relié au rotor du premier moteur électrique (2).

7. Entraînement hybride pour une bicyclette électrique, avec un mécanisme de manivelle de pédalier, qui contient un axe de manivelle de pédalier relié au niveau des deux extrémités à des manivelles de pédalier, un entraînement électromotorisé relié de manière électrique à un accumulateur avec un premier et un deuxième moteur électrique (2, 3), qui sont reliés à des éléments de transmission différents d'une transmission à superposition (4), qui est reliée côté entraînement au mécanisme de manivelle de pédalier (5, 51, 52) et côté sortie à un plateau (6) d'une transmission à chaîne de la bicyclette électrique, dans lequel le premier et le deuxième moteur électrique (2, 3) sont réalisés de manière similaire et sont disposés de manière parallèle par rapport à l'axe de manivelle de pédalier (5), que le premier moteur électrique (2) est relié à une première roue droite (21) d'un premier démultiplicateur (21, 22) et le deuxième moteur électrique (3) est relié à une deuxième roue droite (31) d'un deuxième démultiplicateur (31, 32), dans lequel la première et la deuxième roue droite (21, 31) présentent des nombres de dents différents et s'engagent avec une première ou deuxième roue dentée (22, 32), disposée de manière coaxiale par rapport à l'axe de manivelle de pédalier (5), du premier ou du deuxième démultiplicateur (21, 22 ; 31, 32), et **caractérisé par** un système de commande (8) relié à un dispositif d'entrée et d'affichage (9), pour mettre en œuvre le procédé selon au moins l'une quelconque des revendications 1 à 6.

8. Entraînement hybride selon la revendication 7, **caractérisé en ce que** la transmission à superposition est constituée d'un engrenage planétaire (4) avec une roue solaire (41), une couronne (44) disposée de manière coaxiale par rapport à la roue solaire (41) et d'au moins un pignon satellite (42) en prise avec la roue solaire (41) et la couronne (44) et disposé de manière à pouvoir tourner sur un porte-pignons satellites (43), que la première roue dentée (22) est reliée à la roue solaire (41) et la deuxième roue dentée (32) est reliée à l'axe de manivelle de pédalier (5), qui est couplé au porte-pignons satellites (43), et que la couronne (44) de l'engrenage planétaire (4) est reliée côté sortie au plateau (6).

9. Entraînement hybride selon la revendication 7, **caractérisé en ce que** la transmission à superposition est constituée d'un engrenage planétaire (4) avec une roue solaire (41), une couronne (44) disposée de manière coaxiale par rapport à la roue solaire (41) et d'au moins un pignon satellite (42) en prise avec la roue solaire (41) et la couronne (44) et disposé de manière à pouvoir tourner sur un porte-pignons satellites (43), que la première roue dentée (22) est reliée à la roue solaire (41) et la deuxième roue dentée (32) est reliée à l'axe de manivelle de pédalier (5), qui est couplé à la couronne (44), et que le porte pignons-satellites (43) de l'engrenage planétaire (4) est relié côté sortie au plateau (6).

10. Entraînement hybride selon la revendication 7,
**caractérisé par** un indicateur de position rotorique (10) relié à l'axe de manivelle de pédalier (5), pour détecter la fréquence de pédalage et la direction de rotation du mécanisme de manivelle de pédalier (5, 51, 52) actionné par l'utilisateur.

11. Entraînement hybride selon la revendication 10, **caractérisé en ce que** l'indicateur de position rotorique (10) est constitué d'un capteur optique ou magnétique, qui contient en tant qu'indicateur de position la deuxième roue dentée (32), reliée à l'axe de manivelle de pédalier (5), du deuxième démultiplicateur (31, 32).

12. Entraînement hybride selon la revendication 7, **caractérisé en ce que** le système de commande (8) peut être programmé, et que le dispositif d'entrée et d'affichage (9) est constitué d'une poignée rotative disposée de préférence au niveau du guidon de la bicyclette, d'un commutateur à bascule ou d'un écran tactile.

## Fig. 1

## Fig. 2

Fig 4

Fig 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009045447 A1
- DE 102010028645 A1
- EP 1642820 B1
- US 2017259883 A1
- US 2017259883 A
- US 2012012412 A1
- US 2016318577 A1
- US 20170291660 A